(19) Europäisches Patentamt

European Patent Office

Office européen des brevets

(11) EP 1 073 192 B1

(12) EUROPÄISCHE PATENTSCHRIFT

(45) Veröffentlichungstag und Bekanntmachung des Hinweises auf die Patenterteilung:
**12.01.2005 Patentblatt 2005/02**

(51) Int Cl.[7]: **H02P 7/622**, H02M 5/458

(21) Anmeldenummer: 00114987.1

(22) Anmeldetag: **20.07.2000**

(54) **Verfahren und System zum Betreiben einer Wechselstromlast, insbesondere eines Wechselstrom-Motors mit Drehzahleinstellung**

Method and device for driving an AC load, especially an AC motor with speed control

Procédé et dispositif de contrôle d'une charge à courant alternatif , en particulier d'un moteur à courant alternatif avec contrôle de vitesse

(84) Benannte Vertragsstaaten:
**AT BE CH CY DE DK ES FI FR GB GR IE IT LI LU MC NL PT SE**

(30) Priorität: **26.07.1999 DE 19935048**

(43) Veröffentlichungstag der Anmeldung:
**31.01.2001 Patentblatt 2001/05**

(73) Patentinhaber: **ebm-papst Mulfingen GmbH & Co.KG**
**74673 Mulfingen (DE)**

(72) Erfinder:
• **Zoller, Thomas, Dipl-Ing.**
**74653 Stachenhausen (DE)**

• **Lelkes, Andràs, Dr.-Ing.**
**74653 Künzelsau (DE)**
• **Krotsch, Jens, Dipl.-Ing.**
**97996 Niederstetten (DE)**

(74) Vertreter: **Zapf, Christoph, Dipl.-Ing. et al Patentanwälte Dr. Solf und Zapf, Candidplatz 15 81543 München (DE)**

(56) Entgegenhaltungen:
DE-A- 3 539 647          DE-A- 3 841 147
DE-A- 4 428 682          DE-A- 19 612 117

**Beschreibung**

Die vorliegende Erfindung betrifft ein Verfahren zum Betreiben einer Wechselstromlast, insbesondere eines Wechselstrom-Motors, wobei eine Eingangswechselspannung zu einer pulsierenden, aus Sinushalbwellen bestehenden Eingangsgleichspannung gleichgerichtet und aus dieser Eingangsgleichspannung unter Verwendung einer Endstufe mit gesteuerten, in einer Brückenschaltung angeordneten elektronischen Schaltelementen eine getaktete, pulsweitenmodulierbare Last-Wechselspannung generiert wird, indem jeweils im Bereich von Nulldurchgängen der Eingangswechselspannung die Schaltelemente der Endstufe umkommutiert werden.

Ferner betrifft die Erfindung auch ein System mit Mitteln zum Durchführen des Verfahrens.

Die DE 38 41 147 A1 beschreibt ein derartiges Verfahren zum Ansteuern eines Wechselstrom-Motors. Konkret handelt es sich um einen sogenannten AC-Chopper, bei dem vier Schaltelemente in einer Vollbrücke vorgesehen sind. Die Eingangswechselspannung (Netzspannung) wird zunächst zur pulsierenden Gleichspannung gleichgerichtet. Die Schaltelemente der Vollbrücke werden jeweils pro Netzperiode über Kreuz so angesteuert, daß an der im Brückenzweig liegenden Last (hier Motorwicklung) wieder eine Wechselspannung ansteht und dadurch ein Wechselstrom entsteht. Während einer Netzhalbwelle wird jeweils ein Schaltelement konstant durchgesteuert, während das zugehörige, über Kreuz in der Vollbrücke angeordnete Schaltelement pulsweitenmodulierbar getaktet wird. Mit dem Nulldurchgang der Netzspannung wird jeweils auf das andere über Kreuz angeordnete Schaltelement-Paar kommutiert. Indem zur Taktung eine Frequenz oberhalb des menschlichen Hörvermögens verwendet wird ($\geq$ 16 kHz), wird überwiegend ein ruhiger Motorlauf erreicht. Allerdings hat sich in der Praxis gezeigt, daß es in bestimmten Betriebsfällen bei einem mit dem bekannten Verfahren angesteuerten Wechselstrom-Motor doch zu störenden Betriebsgeräuschen kommen kann.

Der Erfindung liegt deshalb die Aufgabe zugrunde, ausgehend von dem beschriebenen Stand der Technik ein Verfahren der gattungsgemäßen Art zu schaffen, mit dem das Betriebsverhalten weiter verbessert wird. Insbesondere soll bei einem Betrieb eines Wechselstrom-Motors unter allen Betriebsbedingungen eine reduzierte Geräuschentwicklung erreicht werden.

Erfindungsgemäß wird dies dadurch erreicht, daß ein aus der Last-Wechselspannung resultierender Laststrom zur Feststellung einer eventuellen Phasenverschiebung relativ zur Spannung überwacht wird, und daß im Falle einer festgestellten Phasenverschiebung jeweils in den Zeiten, in denen die Eingangswechselspannung und der Laststrom verschiedene Polaritäten aufweisen, eine Ansteuerung der Endstufe derart erfolgt, daß daraus auch in diesen Bereichen eine Taktung der Last-Wechselspannung und ein sinusförmiger Verlauf des Laststromes resultieren.

Damit beruht die Erfindung auf der Erkenntnis, daß die eingangs beschriebenen Probleme beim Stand der Technik dann auftreten, wenn es zwischen Lastspannung und Laststrom zu einer Phasenverschiebung kommt. Dies ist bei einem Motor in den meisten Arbeitspunkten wegen der als induktive Last wirkenden Motorwicklung der Fall; der Laststrom eilt dann der Lastspannung nach. Wenn die Spannung ihren Nulldurchgang hat und demzufolge die Schaltelemente umkommutiert werden, ist der Laststrom somit noch nicht Null. Da der Strom aber auch nicht schlagartig Null werden kann, und da die dann aktiven Schaltelemente nicht in der tatsächlichen Stromflußrichtung liegen, fließt der Strom in dieser Zeit so über Freilaufdioden, daß in diesen Bereichen einer Periode, in denen der Stromfluß - anstatt mit entsprechender Taktung über das eigentlich zuständige Schaltelement-Paar - über die Freilaufdioden statt über die Transistoren geht, somit keine Taktung der Lastspannung möglich ist, da der getaktet gesteuerte Transistor noch keinen Strom führt. Daraus resultieren ein von der Sinusform abweichender Verlauf des Stromes und deshalb auch störende Betriebsgeräusche, die mit zunehmender Phasenverschiebung (abnehmendem cos $\phi$) größer werden.

Erfindungsgemäß wird deshalb zunächst selbsttätig eine Überwachung auf eventuelle Phasenverschiebung vorgenommen, und bei festgestellter Phasenverschiebung erfolgt in den kritischen Zeiten mit verschiedenen Polaritäten von Spannung und Strom eine spezielle neuartige Ansteuerung der Schaltelemente der Endstufe derart, daß dann auch in diesen Bereichen eine durchgehende Taktung der Last-Wechselspannung erreicht wird. Daraus resultiert vorteilhafterweise auch bei einer induktiven oder kapazitiven Last jedenfalls ein optimal sinusförmiger Verlauf des Laststromes. Aus dem Sinusverlauf des Stromes resultiert dann in jedem Arbeitspunkt ein optimal geringes Betriebsgeräusch.

Weitere vorteilhafte Ausgestaltungsmerkmale der Erfindung sind den Unteransprüchen sowie der folgenden Beschreibung enthalten.

Anhand der Zeichungen soll im folgenden die Erfindung beispielhaft genauer erläutert werden. Es zeigen:

Fig. 1     ein Schaltbild einer Endstufe zur Erläuterung des allgemeinen Funktionsprinzips eines gattungsgemäßen Verfahrens,

Fig. 2     ein vereinfachtes, nicht praxisgerechtes Diagramm des Verlaufs der gepulsten Last-Wechselspannung,

Fig. 3     ein realistisches Diagramm von Lastspannung und Laststrom nach einem bekannten gattungsgemäßen Verfahren,

Fig. 4          einen vergrößerten Ausschnitt aus Fig. 3 im Bereich des Nulldurchgangs,

Fig. 5          ein Blockschaltbild eines zur Durchführung des erfindungsgemäßen Verfahrens vorgesehenen Systems,

Fig. 6          ein Schaltbild einer Endstufe nach der Erfindung mit einem neuartigen Schaltkreis zum Erfassen der Nulldurchgänge des Laststromes,

Fig. 7          ein prinzipielles Verlaufsdiagramm von Eingangswechselspannung und Laststrom im Falle einer Phasenverschiebung bei induktiver Last,

Fig. 8          ein Diagramm analog zu Fig. 3 für das erfindungsgemäße Verfahren,

Fig. 9          eine Vergrößerung aus Fig. 8 im Bereich des Nulldurchgangs (analog zu Fig. 4),

Fig. 10         einen möglichen Schaltungsteil zum Erfassen der Nulldurchgänge der Eingangswechselspannung,

Fig. 11 bis 18  jeweils die erfindungsgemäße Schaltung nach Fig. 6 mit eingezeichneten Stromwegen in verschiedenen Betriebszuständen zur Erläuterung der Funktion des erfindungsgemäßen Verfahrens,

Fig. 19         ein genaueres Schaltbild einer Endstufe nach der Erfindung in einer Weiterbildung,

Fig. 20         ein Schaltbild einer die Endstufe steuernden Steuereinheit mit einer zugehörigen Drehzahlstelleinrichtung in einer ersten Ausführungsform und

Fig. 21         eine zweite mögliche Ausführungsform einer Steuereinheit und Drehzahlstelleinrichtung.

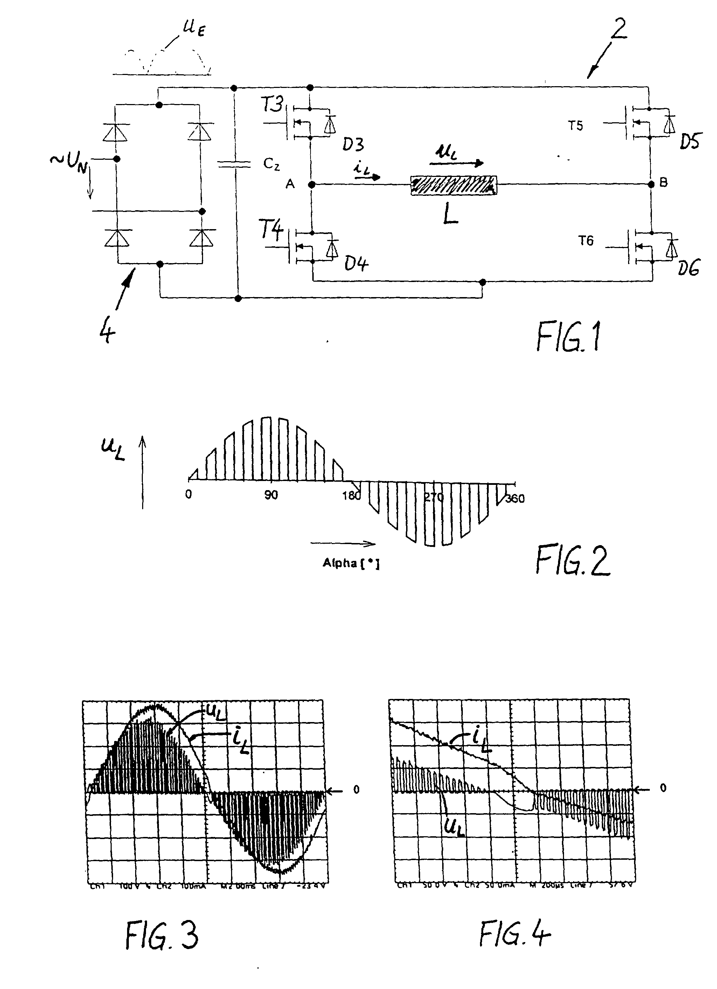

Wie sich aus Fig. 1 ergibt, weist ein gattungsgemäßes - und grundsätzlich auch ein erfindungsgemäßes System - eine Endstufe 2 mit vier in einer Vollbrücke geschalteten Halbleiter-Schaltelementen (Transistoren) T3, T4, T5 und T6 auf, die bevorzugt durch FET's (MOSFET) oder IGBT's gebildet sind. Eine zu betreibende Last L liegt im mittleren Quer-Brückenzweig der Vollbrücke, d. h. an Schaltungspunkten A und B. Parallel zu der Brückenschaltung liegt ein Zwischenkreiskondensator $C_Z$, dessen Kapazität so klein ist, daß die Spannungsform der gleichgerichteten Sinushalbwellen nicht wesentlich verändert wird. Aufgabe dieses Kondensators $C_Z$ ist es, die vom Motor in den Phasen verschiedener Spannungsund Strompolaritäten gelieferte Energie aufzunehmen, da eine Rückspeisung ins Netz durch den Gleichrichter nicht möglich ist. Im Gegensatz zu einem Frequenzumrichter kann dieser Kondensator als robuster Folienkondensator statt eines Elektrolytkondensators ausgeführt werden.

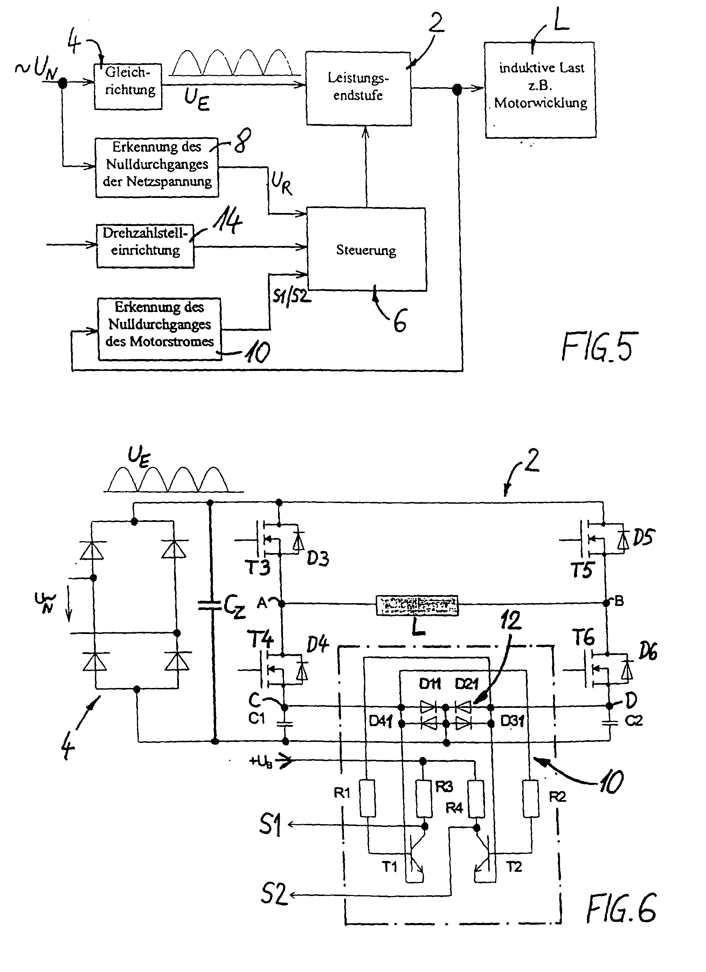

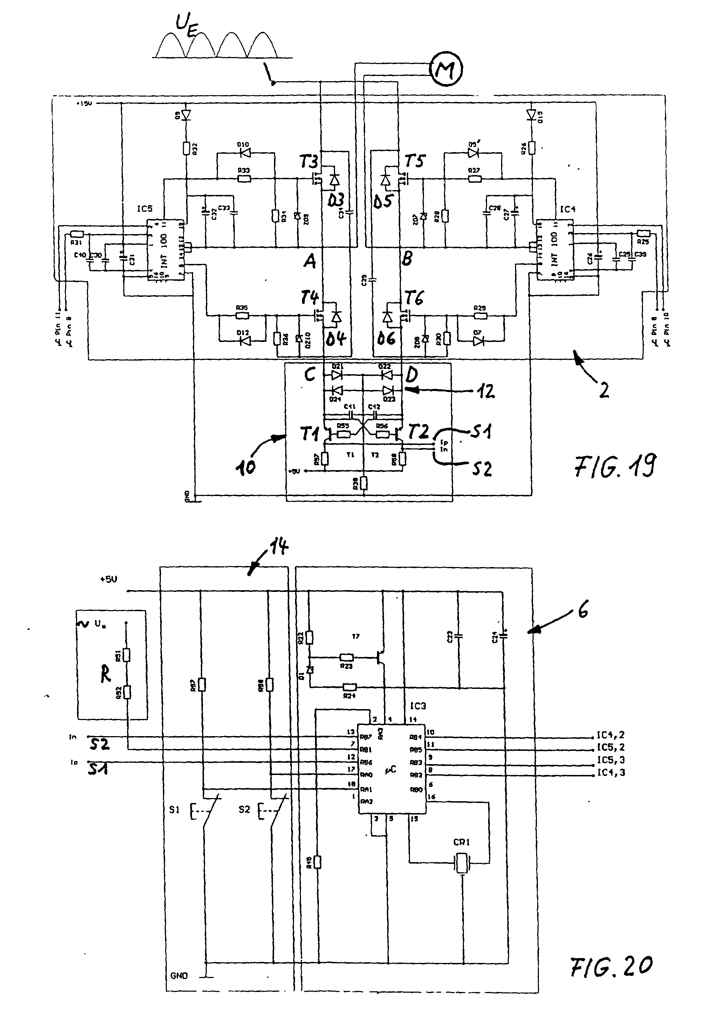

Parallel zur Schaltstrecke (drain-source) jedes Schaltelementes T3 bis T6 liegt eine Freilaufdiode D3 bis D6. Der Endstufe 2 ist eine (Brücken-) Gleichrichterschaltung 4 vorgeschaltet, die eine Eingangswechselspannung $U_N$ (z. B. Netzspannung) zu einer pulsierenden, ungeglätteten und somit aus Sinushalbwellen bestehenden Eingangsgleichspannung $U_E$ gleichrichtet. Die Schaltelemente T3 bis T6 der Endstufe werden dann von einer Steuereinheit 6 (vgl. auch Fig. 5, 20 und 21) so jeweils paarweise über Kreuz angesteuert, daß zur Versorgung der Last L eine Last-Wechselspannung $u_L$ durch Polaritätsumkehr im wesentlichen aus den Halbwellen der Eingangsgleichspannung $U_E$ zusammengesetzt wird. Allerdings wird diese Last-Wechselspannung $U_L$ zur Leistungseinstellung, insbesondere zur Drehzahleinstellung eines als Last L vorgesehenen Wechselstrom-Motors M (vgl. Fig. 19), pulsweitenmodulierbar getaktet, indem jeweils eines (T3 oder T5) der beiden elektronischen Schaltelemente jedes Paares T3, T6 bzw. T4, T5 pulsweitenmodulierbar mit einer konstanten, insbesondere oberhalb des menschlichen Hörvermögens liegenden Taktfrequenz getaktet wird, während das andere Schaltelement (T6 oder T4) des jeweiligen Paares ganz durchgeschaltet wird. Eine andere Steuerungsart, wobei T6 oder T4 getaktet und T3 bzw. T5 durchgesteuert werden, ist gleichwertig.

Dieses insoweit an sich bekannte Prinzip ist vereinfacht in Fig. 2 veranschaulicht. Die Last-Wechselspannung $U_L$ wird mit konstanter Frequenz, aber variabler Pulsbreite getaktet. Die Fig. 2 wurde aus Darstellungsgründen mit einer reduzierten Taktfrequenz aufgenommen. In der Praxis liegt die Taktfrequenz aber - wie bereits erwähnt - über dem hörbaren Bereich, also oberhalb von etwa 16 kHz und insbesondere bei etwa 20 kHz. Durch ein variables Impuls-/ Pausen-Verhältnis (sogenannte PWM-Modulation) kann die Amplitude des resultierenden Laststromes $i_L$ verändert werden. In dem Fall, daß es sich bei der Last L um einen Motor handelt, resultiert daraus eine Veränderung der Drehzahl (Schlupfsteuerung) . In den Zeiten, in denen die Last-Wechselspannung $u_L$ taktbedingt Null ist, wird dafür gesorgt, daß der Laststrom $i_L$ trotzdem in der gleichen Richtung weiterfließen kann. Dies geschieht durch die Freilaufdiode D4 und den durchgesteuerten Transistor T6 bzw. durch D6 und T4.

In Fig. 3 und 4 sind die Last-Wechselspannung $u_L$ und der daraus resultierende Laststrom $i_L$ als realistische Diagramme für ein bekanntes, gattungsgemäßes System veranschaulicht. Es ist erkennbar, daß durch die Taktung der Spannung ein im wesentlichen sinusförmiger Laststrom erreicht wird. Allerdings tritt wegen einer induktiven Last eine Phasenverschiebung auf, wobei der Strom der Spannung nacheilt. Daraus ergibt sich im Bereich des Nulldurchgangs (siehe insbesondere Fig. 4), die Besonderheit, daß bei ungleichen Polaritäten von Spannung und Strom die Spannung nicht mehr durchgehend getaktet wird, weshalb auch der Strom von der idealen Sinusform abweicht. Wenn beispielsweise die phasengleiche Eingangswechselspannung $U_N$ (schon) negativ, der Laststrom $i_L$ aber (noch) positiv sind, so würden sich bei der bekannten Ausführung im Zustand T4 durchgesteuert und T5 getaktet (T3 und T6 beide gesperrt) in Fig. 1 folgende Stromwege ergeben:

a) T4 durchgeschaltet, der getaktete T5 eingeschaltet: $i_L$ aus $C_Z$ über T4 und/oder D4, Last L und T5 und/oder D5 zurück zu $C_Z$.

b) T4 durchgeschaltet, der getaktete T5 gesperrt: $i_L$ aus $C_Z$ über T4 und/oder D4, Last L und Freilaufdiode D5 nach $C_Z$.
      Das heißt, die Motorspannung in dieser Phase ist unabhängig vom PWM-Verhältnis der Steuerung von T5, da D5 immer den Strom leiten kann.
      Bei positiver Spannung und negativem Strom wäre T6 durchgeschaltet und T3 getaktet (T4 und T5 gesperrt):

c) T6 durchgeschaltet, der getaktete T3 eingeschaltet: $i_L$ aus $C_Z$ über T6 und/oder D6, L, T3 und/oder D3 nach $C_Z$.

d) T6 durchgeschaltet, der getaktete T3 gesperrt: $i_L$ aus $C_Z$ über T6 und/oder D6, L, D3 nach $C_Z$.

In allen diesen Fällen ergibt sich:

$$u_L = U_{AB}(t) = \pm \mid U_N(t) \mid = U_N(t).$$

Dies bedeutet, daß keine Taktung der Spannung in diesem Bereich erfolgt und der Laststrom von der Sinusform abweicht (Fig. 4) .

An dieser Stelle setzt die vorliegende Erfindung an, wonach zunächst selbsttätig der Laststrom $i_L$ auf eine Phasenverschiebung relativ zu der Last-Wechselspannung $u_L$ bzw. zu der maßgeblichen Phasenlage der Eingangswechselspannung $U_N$ überwacht wird. Wird hierdurch eine Phasenverschiebung festgestellt, so wird erfindungsgemäß in den Bereichen ungleicher Polarität von Spannung und Strom die Endstufe 2 von der Steuereinheit 6 auf eine neue, spezielle Weise so angesteuert, daß doch auch in diesem Bereich eine Taktung der Spannung und ein optimal sinusförmiger Laststrom erreicht werden.

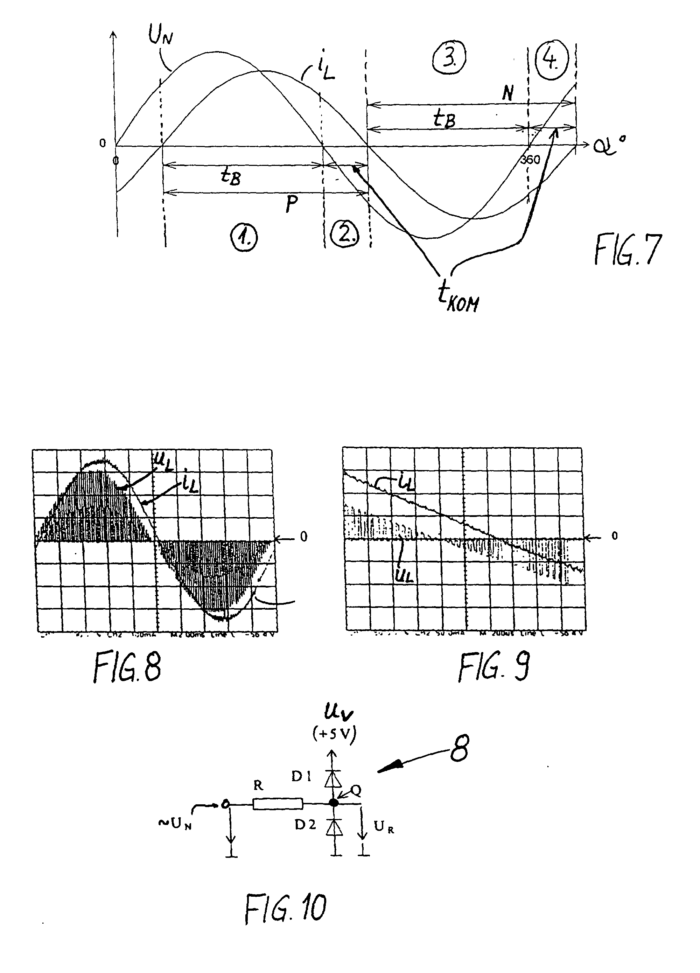

Gemäß Fig. 5 ist dazu der Steuereinheit 6 einerseits eine Einrichtung 8 zur Erkennung der Nulldurchgänge der Eingangswechselspannung $U_N$ (im folgenden vereinfacht "Spannungserkennung 8" genannt) vorgeschaltet sowie andererseits erfindungsgemäß eine Einrichtung 10 zur Erkennung der Nulldurchgänge des Laststromes $i_L$ (im folgenden vereinfacht "Stromerkennung 10" genannt). Die Steuereinheit 6 wertet die entsprechenden Signale der Einrichtungen 8, 10 ($U_R$, S1, S2) so aus, daß die in Fig. 7 veranschaulichten vier Arbeitsbereiche festgestellt werden:

1. Bereich: positive Halbwelle P des Laststromes, gleiche Polarität von Spannung und Strom
2. Bereich: positive Halbwelle P des Laststromes, ungleicher Polarität von Spannung und Strom
3. Bereich: negative Halbwelle N des Laststromes, gleiche Polarität von Spannung und Strom
4. Bereich: negative Halbwelle N des Laststromes, ungleiche Polarität von Spannung und Strom.

Bei den Bereichen 1. und 3. handelt es sich um die Normalbetriebszeiten $t_B$, in denen die Endstufe 2 unverändert in bekannter Weise - wie oben schon kurz beschrieben - angesteuert wird. Die Bereiche 2. und 4. sind sogenannte Kommutierungszeiten $t_{KOM}$, in denen eine spezielle neue, erfindungsgemäße Ansteuerung vorgesehen wird. Die erfindungsgemäße Ansteuerung der einzelnen Schaltelemente der Endstufe 2 in den verschiedenen Bereichen einer Periode ist in der folgenden Tabelle dargestellt:

| Transistor | 1.gleiche Polarität pos.Halbwelle | 2.verschiedene Polarität pos. Halbwelle | 3.gleiche Polarität neg.Halbwelle | 4.verschiedene Polarität neg. Halbwelle |
|---|---|---|---|---|
| T3 | getaktet | gesperrt | gesperrt | gesperrt |
| T4 | gesperrt | gesperrt | durchgesteuert | getaktet |
| T5 | gesperrt | gesperrt | getaktet | gesperrt |
| T6 | durchgesteuert | getaktet | gesperrt | gesperrt |

Aus der Tabelle ergibt sich, daß im Bereich 1. T6 konstant durchgesteuert wird, während T3 mit einem variablen Impuls/Pausen-Verhältnis getaktet wird. Im Bereich 3. wird T4 durchgesteuert und T5 entsprechend getaktet. Erfindungsgemäß wird nun in den Bereichen 2. und 4. der Laststrom in den Zeiten, in denen zur Taktung die Spannung Null sein soll, jeweils in einen Freilaufzweig umgeleitet. Dies geschieht, indem nur jeweils ein Schaltelement T4 oder T6 getaktet wird, während alle übrigen Schaltelemente gesperrt sind. Erfindungsgemäß wird dabei das jeweilige getaktete Schaltelement T4 oder T6 mit einem - gegenüber dem "normalen" Impuls-/Pausen-Verhältnis in den Bereichen 1. und 3. - invertierten Impuls-/Pausen-Verhältnis angesteuert. In den Bereichen 1. und 3. liegt jeweils die Eingangsspannung an der Last an, wenn das getaktete Schaltelement durchschaltet, und wenn es sperrt, ist die Spannung Null. In den Bereichen 2. und 4. ist dies erfindungsgemäß genau umgekehrt.

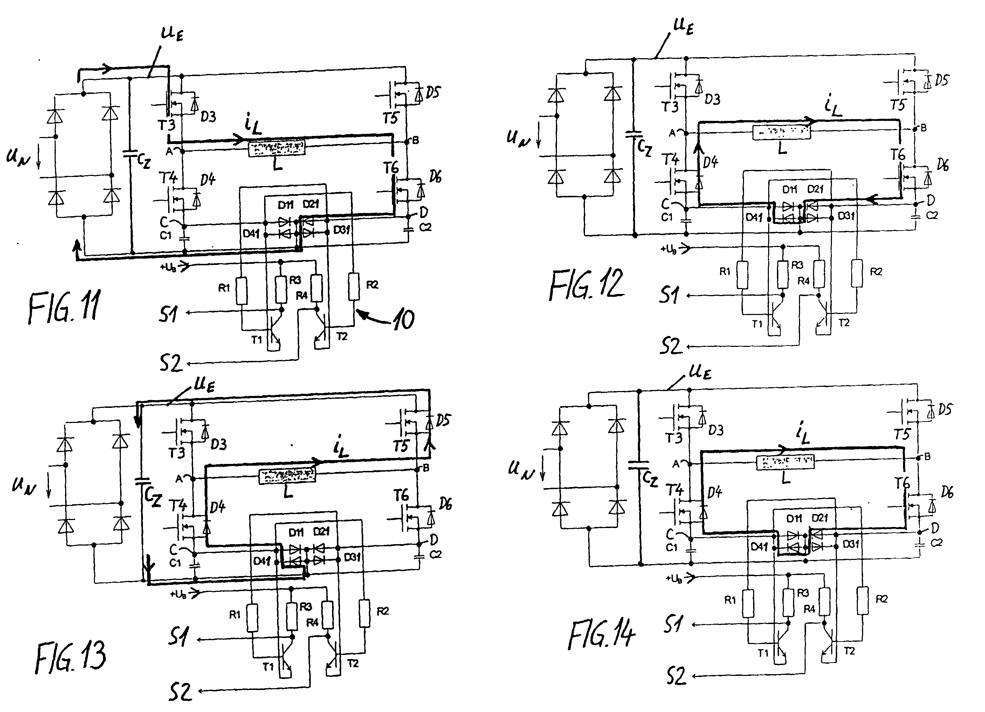

Die verschiedenen Betriebszustände sollen nun anhand der Fig. 11 bis 18 genauer erläutert werden.

Die Fig. 11 und 12 veranschaulichen den 1. Bereich der Periode mit T6 durchgesteuert und T3 getaktet (T4, T5 gesperrt). Gemäß Fig. 11 ist der getaktete T3 gerade leitend. Der Strom fließt dann über T3, Last L und T6, wobei die Spannung $u_L = U_{AB}$ (t) dem Verlauf von $U_N$ (t) entspricht. Gemäß Fig. 12 ist der getaktete T3 gerade gesperrt. Der Strom fließt dann weiter über einen spannungslosen Freilaufzweig über die Last L, den leitenden T6 und die Freilaufdiode D4 des gesperrten T4. Die Spannung ist gleich Null.

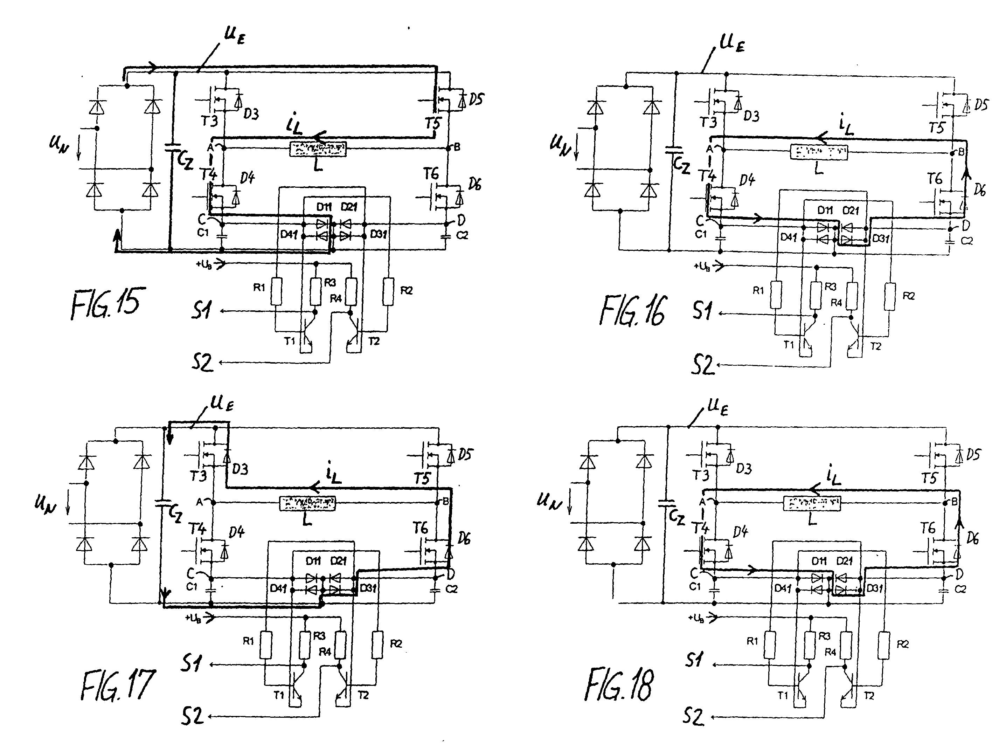

Die Fig. 13 und 14 zeigen den 2. Bereich der Periode mit der erfindungsgemäßen Ansteuerung von nur T6 invertiert getaktet (T3, T4, T5 gesperrt). Gemäß Fig. 13 fließt bei gerade gesperrtem T6 der Strom von $C_Z$ über D4, L, D5 nach $C_Z$, so daß die Spannung dem Verlauf $U_N$ (t) entspricht (Stromkreis über $C_Z$). Gemäß Fig. 14 wird durch getaktetes Durchschalten von T6 die Spannung Null, wobei der Strom entsprechend seinem Sinusverlauf weiterfließt über den Freilaufzweig L, T6, D4.

Der dritte Bereich der Periode ist in den Fig. 15 und 16 veranschaulicht, wobei T5 getaktet und T4 durchgesteuert werden (T3, T6 gesperrt). Gemäß Fig. 15 ist der getaktete T5 gerade leitend, so daß der Strom über T5, L und T4 fließt und die Spannung $U_N$ (t) ist. Gemäß Fig. 16 fließt beim Sperren des getakteten T5 der Strom wieder über einen Freilaufkreis L, T4 und D6, so daß die Spannung Null ist.

Schließlich ist der vierte Bereich der Periode in den Fig. 17 und 18 dargestellt, wobei erfindungsgemäß nur T4 invertiert getaktet wird (T3, T5, T6 gesperrt). Gemäß Fig. 17 fließt bei gerade gesperrtem T4 der Strom über einen Stromkreis von $C_Z$ über D6, L und D3 zurück nach $C_Z$; die Spannung entspricht $U_N$ (t). Gemäß Fig. 18 wird die Spannung Null, indem T4 getaktet durchschaltet und der Strom über den Freilaufkreis L, T4, D6 fließt.

Aus dieser erfindungsgemäßen Ansteuerung resultiert dann vorteilhafterweise der in den Fig. 8 und 9 dargestellte Verlauf von Spannung und Strom, wobei gemäß Fig. 9 auch bei einer Phasenverschiebung im kritischen Bereich der Nulldurchgänge eine durchgehende Taktung der Spannung erreicht wird, woraus unabhängig vom Leistungsfaktor ein optimaler Sinusverlauf des Stromes resultiert. Wird mit dem erfindungsgemäßen System als Wechselstromlast z. B. ein Motor betrieben, so wird in jedem Arbeitspunkt, bedingt durch den sinusförmigem Laststrom, ein optimal niedriges Motorgeräusch erzielt.

Was nun die Spannungserkennung 8 betrifft, so ist eine mögliche Schaltung in Fig. 10 dargestellt. Dabei sind zwei in Reihe an einer Versorgungsspannung $U_V$ liegende Dioden D1 und D2 vorgesehen, deren Verbindungspunkt Q über einen hochohmigen Widerstand R an der Eingangswechselspannung $U_N$ liegt. Die Versorgungsspannung $U_V$ beträgt beispielsweise + 5V. Dadurch entsteht am Verbindungspunkt Q ein im wesentlichen rechteckförmiges Spannungssignal $U_R$, welches der Steuereinheit 6 zugeführt wird. Durch die Dioden D1 und D2 wird von der sinusförmigen Eingangswechselspannung $U_N$ alles abgeschnitten, was $\geq$ 5,7V und $\leq$ -0,7V ist. In den Zeiten, in denen der Spannungswert der Eingangswechselspannung -0, 7V $\leq U_N \leq$ 5, 7V ist, liegt am Punkt Q das gleiche Potential entsprechend der Spannung $U_N$ an. Ist das Potential der Eingangswechselspannung höher oder niedriger als im genannten Bereich, so liegt an Punkt Q entweder konstant -0,7V oder konstant 5,7V an. Somit wird näherungsweise ein Rechtecksignal erzeugt, welches während der positiven Halbwelle der Eingangswechselspannung den Wert 5,7V hat und während der negativen Halbwelle -0,7V.

Für die Stromerkennung 10 ist in Fig. 6 und dementsprechend auch in den Fig. 11 bis 18 eine vorteilhafte Schaltungsmöglichkeit dargestellt. Es handelt sich um eine Diodenbeschaltung 12, die in dem masseseitigen Brücken-Querzweig an Schaltungspunkten C und D liegt und dadurch den jeweiligen Stromfluß in diesem Querzweig C-D überwacht. Die Diodenbeschaltung 12 besteht dazu bevorzugt aus vier Dioden D11, D21, D31 und D41, die paarweise (D11, D41; D21, D31) antiparallel geschaltet sind, wobei der Punkt zwischen den beiden Paaren an Masse liegt (minus der Gleichrichterschaltung 4). Mit den jeweiligen Flußspannungen (Spannungsabfälle bei Stromfluß) werden vorzugsweise zwei Transistoren T1 und/oder T2 angesteuert, die Steuersignale S1 und S2 über den jeweiligen Stromzustand erzeugen. Diese Steuersignale S1 und S2 werden ebenfalls der Steuereinheit 6 zugeführt.

Der (NPN-) Transistor T1 ist mit seinem Emitter am Punkt C angeschlossen, seine Basis über den Widerstand R1 am Punkt D. Dementsprechend ist der (NPN-) Transistor T2 mit seinem Emitter am Punkt D angeschlossen, seine Basis über den Widerstand R2 am Punkt C. Die Kollektoren sind jeweils über einen Widerstand R3 bzw. R4 mit einer Versorgungsspannung $U_B$ von beispielsweise 5V verbunden.

Zur Erläuterung der Funktion soll einmal die positive Halbwelle des Laststromes betrachtet werden (Fig. 11 bis 14). In der Zeit "gleiche Polarität", wenn der getaktete T3 leitet, fließt der Strom auf seinem oben schon beschriebenen Weg gemäß Fig. 11 auch über D21. Wenn T3 sperrt (Fig. 12), liegen D21 und D41 in Reihe im Stromweg. Bei verschiedener Polarität, wenn der getaktete T6 leitet (Fig. 14), fließt der Strom ebenfalls in Reihe über D21 und D41. Bei gesperrtem T6 (Fig. 13) liegt D41 im Stromweg.

Die Bedingung, daß ein (NPN-) Transistor durchsteuert, ist, daß seine Basis mindestens 0,7V positiver sein muß, als sein Emitter. In den Zuständen nach Fig. 11 bis 14 ist diese Bedingung für T1 stets erfüllt, da immer wenigstens eine der Dioden D21 und/oder D41 leitet. Wenn eine Diode von einem Strom durchflossen wird, so ist ihr Anodenpotential immer um ca. 0,7V höher als ihr Kathodenpotential. Somit ist der Punkt D in Fig. 11 und 13 ca. 0,7V positiver als Punkt C (je eine Diode im Stromweg) und in Fig. 12 und 14 um ca, 1,4V positiver (je zwei Dioden in Reihe). Somit steuert T1 die ganze Zeit durch. Das resultierende Steuersignal S1 steht somit auf low (ca. 0V).

Wenn sich die Last L induktiv verhält, was bei einem Einphasenmotor in den meisten Arbeitspunkten der Fall ist, so eilt der Laststrom der Lastspannung nach. Der Nulldurchgang des Laststromes erfolgt dann am Ende der positiven Halbwelle im Bereich "verschiedene Polarität". Wenn der Nulldurchgang des Laststromes eintritt, so erlischt auch der Stromfluß durch die entsprechenden Dioden D21 und/oder D41. Die Potentialdifferenz zwischen Punkt C und D sinkt, wodurch T1 sperrt, da seine Basis nun nicht mehr um mindestens 0,7V positiver als der Emitter ist. Das Steuersignal S1 springt nun, bedingt durch den sperrenden Transistor T1, auf high (ca. + $U_B$). Die Fig. 11 bis 14 zeigen alle möglichen Stromwege während der positiven Halbwelle des Stromes. Egal in welchem Betriebszustand der Nulldurchgang des Laststromes auftritt, das Steuersignal S1 springt stets sofort von low auf high.

Durch diese Schaltung wird somit ein Signal S1 erzeugt, welches am Ende der positiven Halbwelle beim Nulldurchgang des Laststromes von low nach high springt. Während der gesamten negativen Halbwelle ist dieses Signal S1 high. Erst nach Beginn der nächsten positiven Halbwelle springt es wieder auf low.

Entsprechendes gilt analog auch für die negative Halbwelle (vgl. Fig. 15 bis 18), wobei der Transistor T2 mit den Dioden D11 und/oder D31 zusammenwirkt und das Steuersignal S2 erzeugt, welches während der negativen Halbwelle low und während der positiven Halbwelle high ist.

Vorteilhafterweise kann mit dieser bevorzugten Schaltung der Nulldurchgang des Laststromes auch dann sicher erkannt werden, wenn sich die Last L kapazitiv verhält (Strom eilt der Spannung vor), weil ja stets wenigstens eine der Dioden vom Strom durchflossen wird.

Mit den Steuersignalen S1 und/oder S2 der Stromerkennung 10 und mit Signal $U_R$ der Spannungserkennung 8 kann die Steuereinheit 6 die vier beschriebenen Arbeitsbereiche pro Periode eindeutig voneinander abgrenzen und die Ansteuerung der obigen Tabelle vornehmen.

In Fig. 19 ist eine detailliertere Schaltung der Endstufe 2 mit Stromerkennung 10 dargestellt. Bei dieser Variante sind die Basen der Schalter T1, T2 über Widerstände (wie in Verbindung mit Fig. 6 bereits beschrieben) angeschlossen. Beim Kommutieren von einem Transistorpaar, z. B. T3 T6 zu T4 T5, wird eine Totzeit eingehalten, damit T3 T6 sicher sperren, bevor T4 T5 durchgesteuert werden. Dies ist eine Schutzmaßnahme, um Kurzschlüsse in den Transistorhalbbrücken zu vermeiden. Der Motorstrom muß unmittelbar nach dem Abschalten von T3 T6 durch einen Kondensator übernommen werden, damit der Stromanstieg di/dt klein bleibt. Bei zu großem di/dt entstehen Überspannungen, die elektrische Bauteile zerstören können. Der Zwischenkreiskondensator $C_Z$, der in Fig. 19 nicht dargestellt ist, sitzt entsprechend Fig. 11 bis 18 direkt hinter dem Gleichrichter. Zusätzlich ist hier parallel zu jeder Hälfte der Brückenschaltung (T3, T4 und T5, T6) ein Kondensator C34 bzw. C29 vorgesehen. Da die Leitungsinduktivitäten ein sofortiges Übernehmen des Motorstromes durch $C_Z$ verhindern, würden ohne diese Kondensatoren C29 und C34 beim Kommutieren durch ein zu großes di/dt Überspannungen entstehen, die elektronische Bauteile zerstören können. Die Kondensatoren C29 und C34 sind direkt an der jeweiligen Transistorhalbbrücke angeordnet, um die Leitungsinduktivitäten klein zu halten.

Die zugehörige Steuereinheit 6 gemäß Fig. 20 weist in dieser Ausführung einen Microcontroller μC auf, dessen Eingänge üblicherweise eine Schutzbeschaltung aus zwei Dioden enthalten. Sie können eventuell als Teil der Spannungserkennung 8 nach Fig. 10 verwendet werden, so daß extern nur noch der Widerstand R (hier beispielhaft als Reihenschaltung zweier Widerstände R51 und R52) zum Anschluß an die Eingangswechselspannung $U_N$ vorzusehen ist.

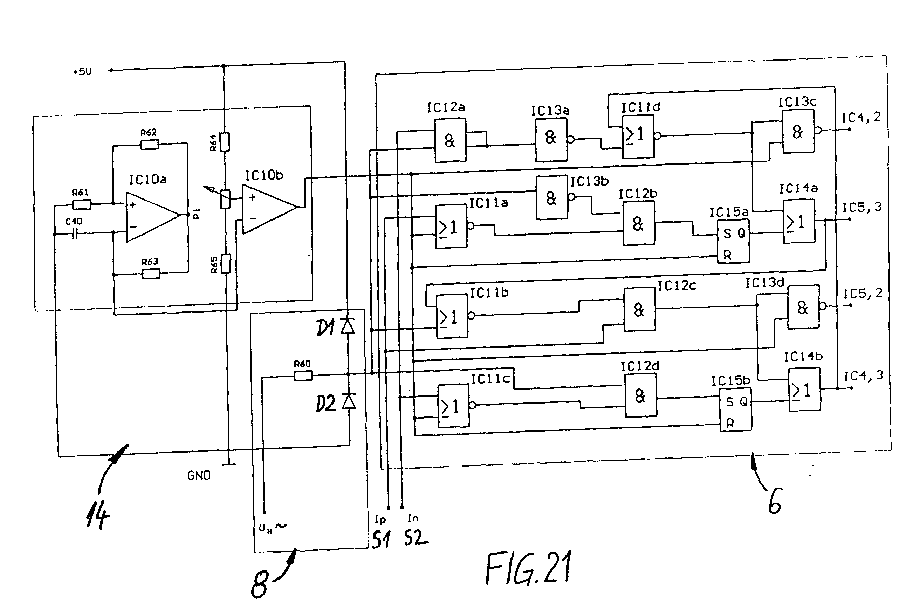

Bei der Ausführungsvariante nach Fig. 21 sind die Dioden D1, D2 der Spannungserkennung 8 dagegen als diskrete Bauelemente ausgebildet. Zudem ist hier die Steuereinheit 6 aus logischen Gattern aufgebaut. Die aus diesen Gattern aufgebaute Schaltung kann auch in monolithisch oder hybrid integrierter Form realisiert werden (z. B. ASIC; FPGA; PAL usw).

Für die bevorzugte Anwendung zur Ansteuerung eines Wechselstrom-Motors mit Drehzahlstellung ist die Steuereinheit 6 gemäß Fig. 5 noch mit einer Einrichtung 14 zum Einstellen der Motordrehzahl verbunden. Dieser Drehzahlsteller 14 kann beispielsweise den Aufbau nach Fig. 20 oder Fig. 21 aufweisen.

**Patentansprüche**

1. Verfahren zum Betreiben einer Wechselstromlast (L), insbesondere eines Wechselstrom-Motors (M), wobei eine Eingangswechselspannung ($U_N$) zu einer pulsierenden, aus Sinushalbwellen bestehenden Eingangsgleichspannung ($U_E$) gleichgerichtet und aus dieser Eingangsgleichspannung ($U_E$) unter Verwendung einer Endstufe (2) mit gesteuerten, in Brückenschaltung angeordneten elektronischen Schaltelementen (T3 bis T6) eine getaktete, pulsweitenmodulierbare Last-Wechselspannung ($U_L$) generiert wird, indem jeweils im Bereich von Nulldurchgängen der Eingangswechselspannung ($U_N$) die Schaltelemente (T3 bis T6) der Endstufe (2) umkommutiert werden,
**dadurch gekennzeichnet,**
**daß** ein aus der Last-Wechselspannung ($U_L$) resultierender Laststrom ($i_L$) zur Feststellung einer eventuellen Phasenverschiebung relativ zur Spannung überwacht wird, und daß im Falle einer festgestellten Phasenverschiebung jeweils in den Zeiten ($t_{KOM}$), in denen die Eingangswechselspannung ($U_N$) und der Laststrom ($i_L$) verschiedene Polaritäten aufweisen, eine Ansteuerung der Endstufe (2) derart erfolgt, daß daraus auch in diesen Bereichen eine wirksame Taktung der Last-Wechselspannung ($U_L$) und so ein sinusförmiger Verlauf des Laststromes ($i_L$) resultieren.

2. Verfahren nach Anspruch 1,
**dadurch gekennzeichnet,**
**daß** die verwendete Endstufe (2) als Vollbrücke mit vier Schaltelementen (T3 bis T6) ausgebildet ist und die Wechselstromlast (L) im Brückenzweig (A-B) liegt, wobei jedem Schaltelement (T3 bis T6) eine integrierte oder separate Freilaufdiode (D3 bis D6) parallelgeschaltet ist, und wobei parallel zu der Vollbrücke ein Zwischenkreiskondensator ($C_Z$) liegt, wobei in den Zeiten ($t_B$), in denen die Eingangswechselspannung ($U_N$) und der Laststrom ($i_L$) gleiche Polaritäten aufweisen, die Schaltelemente (T3, T6; T4, T5) jeweils abwechselnd paarweise über Kreuz so angesteuert werden, daß sich die Last-Wechselspannung ($U_L$) aus den gleichgerichteten Sinushalbwellen der Eingangsspannung ($U_E$) so zusammensetzt, daß die Polarität der Lastspannung ($U_L$) im wesentlichen der Polarität der Eingangsspannung ($U_N$) entspricht.

3. Verfahren nach Anspruch 2,
**dadurch gekennzeichnet,**
**daß** jeweils eines (z. B. T3; T5) der beiden elektronischen Schaltelemente jedes Paares (T3, T6; T4, T5) pulsweitenmodulierbar mit einer konstanten, insbesondere oberhalb des menschlichen Hörvermögens liegenden Taktfrequenz getaktet wird, während das andere Schaltelement (z. B. T6, T4) des jeweiligen Paares ganz durchgeschaltet wird.

4. Verfahren nach einem der Ansprüche 1 bis 3,
**dadurch gekennzeichnet,**
**daß** in den aus einer Phasenverschiebung resultierenden Zeiten ($t_{KOM}$) mit verschiedenen Polaritäten von Eingangswechselspannung ($U_N$) und Laststrom ($i_L$) jeweils nur eines (z. B. T6; T4) der Schaltelemente getaktet angesteuert wird, während alle anderen Schaltelemente (T3, T4, T5; T3, T5, T6) gesperrt werden.

5. Verfahren nach Anspruch 4,
**dadurch gekennzeichnet,**
**daß** das jeweils getaktete Schaltelement (z. B. T6; T4) derart mit einem invertierten Impuls-/Pausen-Verhältnis angesteuert wird, daß der Laststrom ($i_L$) in den Zeiten, in denen die Last-Wechselspannung ($U_L$) taktbedingt jeweils Null sein soll, in einen Freilaufkreis umgeleitet wird.

6. Verfahren nach einem der Ansprüche 1 bis 5,

**dadurch gekennzeichnet,**

**daß** die Endstufe (2) mittels einer Steuereinheit (6) angesteuert wird, wobei mit der Steuereinheit (6) eine Einrichtung (8) zum Erfassen der Nulldurchgänge der Eingangswechselspannung ($U_N$) und eine Einrichtung (10) zum Erfassen der Nulldurchgänge des Laststromes ($i_L$) verbunden ist.

7. Verfahren nach Anspruch 6,
**dadurch gekennzeichnet,**
**daß** eine mit der Steuereinheit (6) verbundene Einrichtung (14) zum Einstellen einer Motordrehzahl verwendet wird.

8. Verfahren nach einem der Ansprüche 1 bis 7,
**dadurch gekennzeichnet,**
**daß** eine der Endstufe (2) vorgeschaltete, insbesondere aus ungesteuerten Dioden aufgebaute Gleichrichterschaltung (4) verwendet wird.

9. Verfahren nach einem der Ansprüche 6 bis 8,
**dadurch gekennzeichnet,**
**daß** die Einrichtung (8) zum Erfassen der Spannungs-Nulldurchgänge zwei in Reihe an einer Versorgungsspannung ($U_V$) liegende Dioden (D1, D2) aufweist, deren Verbindungspunkt (Q) über einen Widerstand (R) an der Eingangswechselspannung ($U_N$) liegt, wobei ein am Verbindungspunkt (Q) entstehendes Signal ($U_R$) der Steuereinheit (6) zugeführt wird.

10. Verfahren nach einem der Ansprüche 6 bis 9,
**dadurch gekennzeichnet,**
**daß** die Einrichtung (10) zum Erfassen der StromNulldurchgänge eine derart in einem Querzweig (C-D) der Endstufen-Brückenschaltung zwischen zwei Schaltelementen (T4, T6) liegende Diodenbeschaltung (12) mit zwei derart angeschlossenen elektronischen Schaltern (T1, T2) aufweist, daß in Abhängigkeit von einem jeweils in der Diodenbeschaltung (12) vorliegenden Stromzustand die elektronischen Schalter (T1, T2) zur Erzeugung von Stromzustandssignalen (S1, S2) angesteuert werden.

11. Verfahren nach Anspruch 10,
**dadurch gekennzeichnet,**
**daß** die Diodenbeschaltung (12) aus vier paarweise antiparallel geschalteten Dioden (D11, D41; D21, D31) besteht, wobei die elektronischen Schalter (T1, T2) mit den bei Stromfluß jeweils an den Dioden auftretenden Spannungsabfällen angesteuert werden.

12. Verfahren nach einem der Ansprüche 6 bis 11,
**dadurch gekennzeichnet,**
**daß** eine einen Microcontroller (µC) aufweisende Steuereinheit (6) verwendet wird.

13. Verfahren nach einem der Ansprüche 6 bis 11,
**dadurch gekennzeichnet,**
**daß** eine aus logischen Gattern aufgebaute Steuereinheit (6) verwendet wird.

14. Verfahren nach Anspruch 13,
**dadurch gekennzeichnet,**
**daß** die logischen Gatter der verwendeten Steuereinheit (6) in einem programmierbaren oder anwender- bzw. anwenderspezifischen Bauteil, beispielsweise ASIC, FPGA, PAL usw., integriert sind.

15. System zum Betreiben einer Wechselstromlast (L), insbesondere eines Wechselstrom-Motors (M) mit einer Gleichrichterschaltung (4) zur Gleichrichtung, einer Eingangswechselspannung ($U_N$) zu einer pulsierenden, aus Sinushalbwellen bestehenden Eingangsgleichspannung ($U_E$), mit einer Endstufe (2) mit gesteuerten in Brückenschaltung angeordneten elektronischen Schaltelementen (T3 bis T6) zur Generierung einer getakteten, pulsweitenmodulierbaren Last-Wechselspannung ($U_L$) aus dieser Engangsgleichspannung mit einer Steuereinheit (6) zur Umkommutierung jeweils im Bereich von Nulldurchgängen der Eingangswechselspannung ($U_N$) der Schaltelemente (T3 bis T6) der Endstufe (2), **gekennzeichnet durch** Mittel zum überwachen eines aus der Last-Wechselspannung ($U_L$) resultierenden Laststroms ($i_L$) zur Feststellung einer eventuellen Phasenverschiebung relativ zur Spannung, sowie **durch** Mittel, die im Falle einer festgestellten Phasenverschiebung jeweils in den Zeiten ($t_{KOM}$), in denen die Eingangswechselspannung ($U_N$) und der Laststrom ($i_L$) verschiedene Polaritäten aufweisen, eine Ansteuerung der Endstufe (2) derart veranlassen, daß daraus auch in diesen Bereichen eine wirksame Taktung der Last-Wechselspannung ($U_L$) und so ein sinusförmiger Verlauf des Laststromes ($i_L$) resultieren.

**16.** System nach Anspruch 15,
**dadurch gekennzeichnet,**
**daß** die Endstufe (2) als Vollbrücke mit vier Schaltelementen (T3 bis T6) ausgebildet ist und die Wechselstromlast (L) im Brückenzweig (A-B) liegt, wobei jedem Schaltelement (T3 bis T6) eine integrierte oder separate Freilaufdiode (D3 bis D6) parallelgeschaltet ist, und wobei parallel zu der Vollbrücke ein Zwischenkreiskondensator ($C_z$) liegt.

**17.** System nach Anspruch 15 oder 16 mit Mitteln, zur Durchführung des Verfahrens nach einem der Ansprüche 2 bis 14.

## Claims

**1.** Method for operating an AC load (L), in particular an AC motor (M), an input AC voltage ($U_N$) being rectified to form a pulsating input DC voltage ($U_E$) comprising sinusoidal half-waves, and a clocked load AC voltage ($U_L$), which can be pulse-width modulated, being generated from this input DC voltage ($U_E$) using an end stage (2) having controlled electronic switching elements (T3 to T6), which are arranged in a bridge circuit, by the switching elements (T3 to T6) of the end stage (2) being recommutated in each case in the region of zero crossings of the input AC voltage ($U_N$), **characterized in that** a load current ($i_L$), resulting from the load AC voltage ($U_L$), is monitored for the purpose of establishing a possible phase shift relative to the voltage, and **in that**, in the event of a phase shift being established, the end stage (2) is driven in each case at the times ($t_{COM}$) at which the input AC voltage ($U_N$) and the load current ($i_L$) have different polarities, such that, even in these regions, there is as a result effective clocking of the load AC voltage ($U_L$) and thus a sinusoidal characteristic for the load current ($i_L$).

**2.** Method according to Claim 1, **characterized in that** the end stage (2) used is in the form of a full bridge having four switching elements (T3 to T6), and the AC load (L) is in the bridge arm (A-B), an integrated or separate freewheeling diode (D3 to D6) being connected in parallel with each switching element (T3 to T6), and an intermediate circuit capacitor ($C_Z$) lying in parallel with the full bridge, the switching elements (T3, T6; T4, T5) in each case being driven alternately in pairs diagonally opposite at the times ($t_B$) at which the input AC voltage ($U_N$) and the load current ($i_L$) have the same polarities, such that the load AC voltage ($U_L$) is composed of the rectified sinusoidal half-waves of the input voltage ($U_E$) such that the polarity of the load voltage ($U_L$) essentially corresponds to the polarity of the input voltage ($U_N$).

**3.** Method according to Claim 2, **characterized in that** in each case one (for example T3; T5) of the two electronic switching elements in each pair (T3, T6; T4, T5) is clocked such that it can be pulse-width modulated at a constant clock frequency lying in particular above the human audible range, whereas the other switching element (for example T6, T4) of the respective pair is fully switched on.

**4.** Method according to one of Claims 1 to 3, **characterized in that**, at the times ($t_{COM}$), resulting from a phase shift, having different polarities of input AC voltage ($U_N$) and load current ($i_L$), in each case only one (for example T6; T4) of the switching elements is driven in a clocked manner, whereas all of the other switching elements (T3, T4, T5; T3, T5, T6) are turned off.

**5.** Method according to Claim 4, **characterized in that** the respectively clocked switching element (for example T6; T4) is driven by an inverted pulse/interpulse ratio such that the load current ($i_L$) is diverted to a freewheeling circuit at the times at which the load AC voltage ($U_L$) is intended in each case to be zero in a clock-dependent manner.

**6.** Method according to one of Claims 1 to 5, **characterized in that** the end stage (2) is driven by means of a control unit (6), a device (8) for the purpose of detecting the zero crossings of the input AC voltage ($U_N$) and a device (10) for the purpose of detecting the zero crossings of the load current ($i_L$) being connected to the control unit (6).

**7.** Method according to Claim 6, **characterized in that** a device (14), which is connected to the control unit (6), is used for the purpose of setting a motor speed.

**8.** Method according to one of Claims 1 to 7, **characterized in that** a rectifier circuit (4) is used which is connected upstream of the end stage (2) and is made up of, in particular, uncontrolled diodes.

9. Method according to one of Claims 6 to 8, **characterized in that** the device (8) for the purpose of detecting the voltage zero crossings has two diodes (D1, D2) lying in series with a supply voltage ($U_V$), the connection point (Q) of said diodes (D1, D2) having the input AC voltage ($U_N$) applied to it via a resistor (R), a signal ($U_R$), produced at the connection point (Q), being supplied to the control unit (6).

10. Method according to one of Claims 6 to 9, **characterized in that** the device (10) for the purpose of detecting the current zero crossings has a diode circuit (12), which is connected in such a manner in a parallel path (C-D) of the end-stage bridge circuit between two switching elements (T4, T6), and has two electronic switches (T1, T2) connected such that, as a function of a current state respectively present in the diode circuit (12), the electronic switches (T1, T2) are driven for the purpose of producing current state signals (S1, S2).

11. Method according to Claim 10, **characterized in that** the diode circuit (12) comprises four diodes (D11, D41; D21, D31) which are connected in pairs and back-to-back in parallel, the electronic switches (T1, T2) being driven using the voltage drops occurring in each case across the diodes when current is flowing.

12. Method according to one of Claims 6 to 11, **characterized in that** a control unit (6) having a microcontroller ($\mu$C) is used.

13. Method according to one of Claims 6 to 11, **characterized in that** a control unit (6) made up of logic gates is used.

14. Method according to Claim 13, **characterized in that** the logic gates of the control unit (6) used are integrated in a programmable or user-specific component, for example ASIC, FPGA, PAL etc.

15. System for operating an AC load (L), in particular an AC motor (M), by means of a rectifier circuit (4) for the purpose of rectifying an input AC voltage ($U_N$) to form a pulsating input DC voltage ($U_E$) comprising sinusoidal half-waves, having an end stage (2) having controlled electronic switching elements (T3 to T6), which are arranged in a bridge circuit, for the purpose of generating a clocked load AC voltage ($U_L$), which can be pulse-width modulated, from this input DC voltage by means of a control unit (6) for the purpose of recommutating the switching elements (T3 to T6) of the end stage (2) in each case in the region of zero crossings of the input AC voltage ($U_N$), **characterized by** means for monitoring a load current ($i_L$), resulting from the load AC voltage ($U_L$), for the purpose of establishing a possible phase shift relative to the voltage, as well as by means which, in the event of a phase shift being established, cause the end stage (2) to be driven in each case at the times ($t_{COM}$) at which the input AC voltage ($U_N$) and the load current ($i_L$) have different polarities, such that, even in these regions, there is as a result effective clocking of the load AC voltage ($U_L$) and thus a sinusoidal characteristic for the load current ($i_L$).

16. System according to Claim 15, **characterized in that** the end stage (2) is in the form of a full bridge having four switching elements (T3 to T6), and the AC load (L) is in the bridge arm (A-B), an integrated or separate freewheeling diode (D3 to D6) being connected in parallel with each switching element (T3 to T6), and an intermediate circuit capacitor ($C_Z$) lying in parallel with the full bridge.

17. System according to Claim 15 or 16 having means for the purpose of carrying out the method according to one of Claims 2 to 14.

**Revendications**

1. Procédé pour le fonctionnement d'une charge à courant alternatif (L), en particulier d'un moteur à courant alternatif (M), une tension alternative à l'entrée ($U_N$) étant redressée en une tension continue à l'entrée ($U_E$) pulsée, constituée de demi-ondes sinusoïdales, et une tension alternative de charge ($U_L$) découpée, à modulation d'impulsions en largeur étant générée à partir de cette tension continue à l'entrée ($U_E$) en utilisant un étage de sortie avec des éléments de commutation (T3 à T6) électroniques commandés, disposés dans un montage en pont, les éléments de commutation (T3 à T6) de l'étage de sortie (2) étant commutés dans la zone des passages par zéro de la tension alternative à l'entrée ($U_N$), **caractérisé en ce qu'**un courant de charge ($i_L$) résultant de la tension alternative de charge ($U_L$) est surveillé pour détecter un éventuel décalage de phase relativement à la tension, et que dans le cas d'un décalage de phase constaté dans les temps ($t_{kom}$) pendant lesquels la tension alternative à l'entrée ($U_N$) et le courant de charge ($i_L$) présentent des polarités différentes, une commande de l'étage de sortie (2) est effectuée de telle manière qu'il en résulte, aussi dans ces zones, un découpage efficace de la tension alternative de charge ($U_L$) et ainsi une courbe du courant de charge ($i_L$) sinusoïdale.

**2.** Procédé selon la revendication 1, **caractérisé en ce que** l'étage de sortie utilisé (2) est conçu comme un pont intégral avec quatre éléments de commutation (T3 à T6) et que la charge de courant alternatif (L) est située dans la branche du pont (A-B), une diode de roue libre (D3 à D6) intégrée ou séparée étant montée en parallèle avec chaque élément de commutation (T3 à T6) et un condensateur de circuit intermédiaire (C$_Z$) étant situé parallèlement au pont intégral, les éléments de commutation (T3, T6 ; T4, T5) étant commandés alternativement par paires en croix dans les temps (t$_B$) pendant lesquels la tension alternative à l'entrée (U$_N$) et le courant de charge (i$_L$) présentent la même polarité, de telle sorte que la tension alternative de charge (U$_L$) est composée des demi-ondes sinusoïdales redressées de la tension à l'entrée (U$_E$) de façon que la polarité de la tension de charge (U$_L$) corresponde essentiellement à la polarité de la tension à l'entrée (U$_N$).

**3.** Procédé selon la revendication 2, **caractérisé en ce que** l'un des deux éléments de commutation électroniques (T3 ; T5, par exemple) de chaque paire (T3, T6 ; T4, T5) est découpé avec modulation d'impulsions en largeur avec une fréquence constante, en particulier située au-dessus de la capacité auditive humaine, tandis que l'autre élément de commutation (T6, T4, par exemple) de l'autre paire est entièrement passant.

**4.** Procédé selon l'une des revendications 1 à 3, **caractérisé en ce que**, dans les temps résultant d'un décalage de phase (t$_{kom}$) avec des polarités différentes entre tension alternative à l'entrée (U$_N$) et courant de charge (iL), seul l'un des éléments de commutation (T6 ; T4 par exemple) est commandé de manière découpée tandis que tous les autres éléments de commutation (T3, T4, T5 ; T3, T5, T6) sont bloqués.

**5.** Procédé selon la revendication 4, **caractérisé en ce que** seul l'élément de commutation découpé (T6 ; T4, par exemple) est commandé avec un rapport impulsions/intervalles inversé de telle sorte que le courant de charge (i$_L$) est dérivé dans un circuit de roue libre dans les temps pendant lesquels la tension alternative de charge (U$_L$) doit être égale à zéro du fait du découpage.

**6.** Procédé selon l'une des revendications 1 à 5, **caractérisé en ce que** l'étage de sortie (2) est commandé au moyen d'une unité de commande (6), un dispositif (8) pour détecter les passages par zéro de la tension alternative à l'entrée (U$_N$) et un dispositif (10) pour détecter les passages par zéro du courant de charge (i$_L$) étant reliés à l'unité de commande (6).

**7.** Procédé selon la revendication 6, **caractérisé en ce qu'**un dispositif (14) relié à l'unité de commande (6) est utilisé pour régler la vitesse d'un moteur.

**8.** Procédé selon l'une des revendications 1 à 7, **caractérisé en ce qu'**un montage redresseur (4) constitué en particulier de diodes non commandées, monté en amont de l'étage final (2), est utilisé.

**9.** Procédé selon l'une des revendications 6 à 8, **caractérisé en ce que** le dispositif (8) pour détecter les passages par zéro de la tension présente deux diodes (D1, D2) montées en série sur une tension d'alimentation (U$_V$), dont le point de connexion (Q) est situé à la tension alternative à l'entrée (U$_N$) par l'intermédiaire d'une résistance (R), un signal (U$_R$) produit au point de connexion (Q) étant amené à l'unité de commande (6).

**10.** Procédé selon l'une des revendications 6 à 9, **caractérisé en ce que** le dispositif (10) destiné à détecter les passages du courant par zéro présente un montage de diodes (12) situé dans une branche transversale (C-D) du montage en pont de l'étage de sortie entre deux éléments de commutation (T4, T6) avec deux interrupteurs électroniques (T1, T2) raccordés de telle manière que, en fonction d'un état de courant existant dans le montage de diodes (12), les interrupteurs électroniques (T1, T2) sont commandés pour produire des signaux d'état de courant (S1, S2).

**11.** Procédé selon la revendication 10, **caractérisé en ce que** le montage de diodes (12) est constitué de quatre diodes montées de manière antiparallèle par paires (D11, D41 ; D21, D31), les interrupteurs électroniques (T1, T2) étant commandés avec les baisses de tension se produisant aux diodes lors du flux de courant.

**12.** Procédé selon l'une des revendications 6 à 11, **caractérisé en ce qu'**une unité de commande (6) présentant un micro-contrôleur (µC) est utilisée.

**13.** Procédé selon l'une des revendications 6 à 11, **caractérisé en ce qu'**une unité de commande (6) constituée de grilles logiques est utilisée.

14. Procédé selon la revendication 13, **caractérisé en ce que** les grilles logiques de l'unité de commande utilisée (6) sont intégrées dans un composant programmable ou spécifique à une application, tel que ASIC, FPGA, PAL, etc.

15. Système pour le fonctionnement d'une charge à courant alternatif (L), en particulier d'un moteur à courant alternatif (M) au moyen d'un montage redresseur (4) pour redresser une tension alternative à l'entrée ($U_N$) en une tension continue à l'entrée ($U_E$) pulsatoire, composée de demi-ondes sinusoïdales, avec un étage de sortie (2) avec des éléments de commutation électroniques (T3 à T6) commandés, disposés dans un montage en pont, pour générer une tension alternative de charge ($U_L$) cadencée avec modulation d'impulsions en largeur à partir de cette tension continue à l'entrée au moyen d'une unité de commande (6) destinée à commuter des éléments de commutation (T3 à T6) de l'étage de sortie (2) dans la zone de passages par zéro de la tension alternative à l'entrée ($U_N$), **caractérisé par** des moyens de surveillance d'un courant de charge ($i_L$) résultant de la tension alternative de charge ($U_L$) pour constater un éventuel décalage de phase relativement à la tension, ainsi que par des moyens qui, en cas de décalage de phase constaté dans les temps $t_{(kom)}$ pendant lesquels la tension alternative à l'entrée ($U_N$) et le courant de charge (iL) présentent des polarités différentes, provoquent une commande de l'étage de sortie (2) de telle sorte qu'il en résulte aussi dans ces zones une cadence efficace de la tension alternative de charge ($U_L$) et ainsi une courbe sinusoïdale du courant de charge ($i_L$).

16. Système selon la revendication 15, **caractérisé en ce que** l'étage de sortie (2) est conçu comme un pont intégral avec quatre éléments de commutation (T3 à T6) et que la charge de courant alternatif (L) est située dans la branche du pont (A-B), une diode de roue libre (D3 à D6) intégrée ou séparée étant montée en parallèle à chaque élément de commutation (T3 à T6), et un condensateur de circuit intermédiaire ($C_Z$) étant parallèle au pont intégral.

17. Système selon la revendication 15 ou 16 avec des moyens pour mettre en oeuvre le procédé selon l'une des revendications 2 à 14.

FIG.1

FIG.2

FIG.3

FIG.4

FIG.5

FIG.6

FIG.7

FIG.8

FIG. 9

FIG. 10

15

EP 1 073 192 B1

FIG.12

FIG.14

FIG.11

FIG.13

16

EP 1 073 192 B1

FIG.15

FIG.16

FIG.17

FIG.18

17

EP 1 073 192 B1

FIG. 19

FIG. 20

18

FIG.21